# EUROPÄISCHE PATENTANMELDUNG

(11) **EP 2 903 201 A1**
(43) Veröffentlichungstag der Anmeldung: **05.08.2015**
(21) Anmeldenummer: 14189740.5
(22) Anmeldetag: 21.10.2014
(51) Int. Cl.: H04L 9/08, G09C 1/00

(54) **SCHALTKREISEINHEIT ZUR BEREITSTELLUNG EINES KRYPTOGRAPHISCHEN SCHLÜSSELS UNTER VERWENDUNG VON MEHREREN PUFS**

(30) Priorität: 27.12.2013 DE 102013227166
(71) Anmelder: Siemens Aktiengesellschaft, 80333 München (DE)
(72) Erfinder: Falk, Rainer, 85586 Poing (DE)

(57) **Zusammenfassung**

Es wird eine Schaltkreiseinheit (1) zur Bereitstellung eines kryptographischen Schlüssels vorgeschlagen. Die Schaltkreiseinheit (1) weist eine Physical Unclonable Function (11) zum Erzeugen eines Response-Wertes (RI) in Antwort auf einen Challenge-Wert (CI), eine Bestimmungseinheit (12) zum Bestimmen einer Mehrzahl von Challenge-Werten (CI) und zum Eingeben der Mehrzahl von Challenge-Werten (CI) in die Physical Unclonable Function (11), um eine Mehrzahl von Response-Werten (RI) zu erzeugen, eine Vergleichseinheit (13) zum Bereitstellen eines Vergleichsergebnisses durch Vergleichen der erzeugten Mehrzahl von Response-Werten (RI) mit einem vordefinierten Referenzwert (18), und eine Bereitstellungeinheit (14) zum Bereitstellen eines der Mehrzahl von Challenge-Werten (CI) als kryptographischen Schlüssel (KS) basierend auf dem bereitgestellten Vergleichsergebnis auf.

Mit der vorgeschlagenen Schaltkreiseinheit werden Challenge-Werte nicht vorgegeben und dazu passende Response-Werte ermittelt, sondern ein Challenge-Wert gesucht, der am besten zu einem vorgegebenen Referenzwert passt. Dieser wird dann als kryptographischer Schlüssel verwendet. Daher ist es nicht erforderlich, den kryptographischen Schlüssel zu erzeugen und dann geschützt zu speichern.

Des Weiteren wird ein Verfahren zur Bereitstellung eines kryptographischen Schlüssels vorgeschlagen.

## Beschreibung

Die vorliegende Erfindung betrifft eine Schaltkreiseinheit zur Bereitstellung eines kryptographischen Schlüssels. Des Weiteren betrifft die vorliegende Erfindung ein Verfahren zur Bereitstellung eines kryptographischen Schlüssels und ein Computerprogrammprodukt, um die Durchführung eines solchen Verfahrens zu veranlassen.

Für viele Anwendungen ist ein kryptographischer Schlüssel erforderlich. Es ist bekannt, einen kryptographischen Schlüssel zufällig zu erzeugen. Dieser muss dann jedoch, soweit er nicht bei jeder Benutzung manuell eingegeben werden soll, in einem Speicherbaustein abgespeichert werden. Für eine sichere Speicherung können z.B. physikalisch geschützte Hardware-Bausteine (Crypto Controller, Secure Memory Bausteine) verwendet werden. Auch kann ein kryptographischer Schlüssel in obfuszierter Form abgespeichert werden, d.h. in einer Form, in der der Schlüssel durch einen Außenstehenden nur mit einem gewissen Analyse-Aufwand ermittelbar ist.

Es sind Physical Unclonable Functions (PUFs) auf einem Halbleiter-Schaltkreis bekannt. Unterschiedliche Arten von PUFs existieren, wie es z.B. in https://www.cosic.esat.kuleuven.be/ecrypt/courses/albenall/sl ides/ingrid_verbauwhede_pufs.pdf erläutert ist. Beispielsweise kann eine SRAM-PUF verwendet werden, um abhängig von dem Speicherinhalt eines SRAM-Speichers nach dem Einschalten einen Schlüssel zu bestimmen. Es sind auch Ring-Oszillator-PUFs und Arbiter-PUFs bekannt, die abhängig von einem Challenge-Wert einen Response-Wert bereitstellen.

Des Weiteren ist bekannt, mittels eines Fuzzy Key Extractors unter Verwendung einer PUF einen kryptographischen Schlüssel zu extrahieren. Ein Fuzzy Key Extractor benötigt jedoch Hilfsdaten, auch Helper Data genannt, die beim Speichern eines Schlüssels erzeugt werden müssen. Diese müssen außerdem abgespeichert werden, wozu ein nichtflüchtiger Speicher erforderlich ist. Einen Überblick über PUF-basierte Schlüsselerzeugung gibt z.B. http://www.cosic.esat.kuleuven.be/publications/article-2323.pdf (M. Yu, D. M'Raihi, S. Devadas, and I. Verbauwhede, "Security and Reliability Properties of Syndrome Coding Techniques Used in PUF Key Generation," In GOMACTech conference 38, GomacTech, pp. 1-4, 2013).

Bei den bekannten Verfahren werden Hilfsdaten benötigt, die während einer Initialisierungsphase erzeugt werden müssen. Diese müssen in einem nichtflüchtigen Speicher abgelegt werden, wozu ein geeigneter Speicherbaustein benötigt wird. Außerdem ist es erforderlich beim Design des Key Extractors darauf zu achten, dass die gespeicherten Daten keine verdeckte Information auf den Schlüssel enthalten. Wenn beispielsweise der Fehlerkorrekturcode "zu gut" ist, kann aus den öffentlichen Hilfsdaten auch ohne PUF der Schlüssel extrahiert wird.

In http://people.csail.mit.edu/devadas/pubs/host2011.pdf (Zdenek (Sid) Paral, Srinivas Devadas: Reliable and Efficient PUF-Based Key Generation Using Pattern Matching, IEEE Int'l Symposium on Hardware-Oriented Security and Trust (HOST), 2011) wird eine Methode beschrieben, um durch Pattern Matching der PUF-Responses einen Schlüssel zu bestimmen. Dies ist auch in WO 2012/099657 A2 beschrieben, aus der bekannt ist, mittels einer Challenge-Response-PUF einen kryptographischen Schlüssel ohne Fuzzy Key Extractor zu erzeugen. Dazu erfolgt ein Pattern Matching der PUF- Response-Werte, die mittels einer vorgegebenen Folge von Challenge-Werten erzeugt wird. Als Information für die Schlüsselbestimmung dient hierbei die Position, d.h. der Index, des Elements der Folge von Response-Werten, an der ein bestimmtes Soll-Response-Pattern erstmalig auftritt. Bei der Initialisierungsphase wird als Referenzmusters derjenige Response-Wert gespeichert, der an derjenigen Stelle, d.h. Index, der Folge von Response-Werten auftritt, bei dem der Index-Wert dem Schlüssel-Wert entspricht.

Bei diesem Verfahren wird eine Initialisierungs-Phase durchgeführt, bei der Hilfsdaten, d.h. die für die SchlüsselRekonstruktion benötigten Bit-Pattern bzw. -muster, abgespeichert werden. Es ist ein beliebiger zu rekonstruierender Schlüssel vorgebbar, für den, z.B. bei der Herstellung, entsprechende Hilfsdaten ermittelt und abgespeichert werden. Hierbei wird für einen bestimmten gewünschten Key bzw. kryptographischen Schlüssel während der Initialisierungs-Phase ermittelt, welches Bitmuster (Pattern) an derjenigen Position in der Folge vorliegt, die dem gewünschten Schlüsselwert entspricht. Es ist im Allgemeinen nicht auszuschließen, dass das ermittelte Bitmuster bzw. ein hinreichend ähnliches Bitmuster auch bereits an einer früheren Position auftritt. Der gewünschte Schlüssel wäre dann nicht korrekt rekonstruierbar.

In Haile Yu, Philipp Leong, Qiang Xu: An FPGA Chip Identification Generator using Configurable Ring Oscillators, IEEE Trans. VLSI Syst. 20(12): 2198-2207 (2012), http://www.ee.usyd.edu.au/people/philip.leong/UserFiles/File/ papers/id_tvlsi12.pdf, ist eine Methode beschrieben, um auf einem FPGA aus einer konfigurierbaren PUF eine stabile ID ("Seriennummer") ohne Hilfsdaten zu ermitteln. Dazu wird ein Bit der ID mittels einer konfigurierbaren PUF ermittelt, indem die Residue für alle möglichen Konfigurationen der PUF ermittelt wird. Die Residue ist dabei die "Roh-Response", d.h. die Differenz der Zählerwerte der verwendete Ringoszillator-PUFs. Es wird nun die Konfiguration der PUF bestimmt, bei der der Absolutbetrag der Residue maximal ist. Das Vorzeichen der maximalen Residue ergibt die ermittelte Polarität der PUF, d.h. das zugeordnete Bit der ID. Falls ein Sicherheitsabstand zur eindeutigen Bestimmung des Polarität bei einer PUF nicht erreicht wird, so wird iterativ der Bereich der betrachteten Konfigurationen der PUF nach einem festen Kriterium (untere Hälfte der Konfigurationen entsprechend dem Index der Konfiguration) solange eingeschränkt, bis ein Ergebnis bestimmt werden kann, bei dem die Residue hinreichend eindeutig ist. Selbst wenn die mehreren Konfigurationen einer PUF als Challenge aufgefasst werden, so wird das Ergebnis (Polarität/Bit ist 0 oder 1) abhängig von der PUF-Roh-Response bzw. der Residue, d.h. der Differenz der Zählerwerte einer Ringoszillator-PUF, ermittelt.

WO 2010/060005 A2 beschreibt, dass ein Schaltkreis einen Challenge-Generator enthält, der eine Folge von Challenge-Werten erzeugt, mit dem eine PUF des Schaltkreises beaufschlagt wird. Aus den Roh-Response-Daten (inner response) wird durch eine Nachbearbeitung ein Response-Wert ermittelt, der nach außen gegeben wird. US 2013/010957 A1 offenbart, einen mittels einer PUF bestimmten, mit Bitfehlern behafteten kryptographischen Schlüssel direkt, d.h. ohne nachfolgenden Key Extractor, für eine sichere Kommunikation mit einem Kommunikationspartner zu verwenden.

Aus http://rijndael.ece.vt.edu/puf/paper/fpl2009.pdf (Abhranil Maiti, Patrick Schaumont: IMPROVING THE QUALITY OF A PHYSICAL UNCLONABLE FUNCTION USING CONFIGURABLE RING OSCILLATORS, pp.703-707 In proceeding of: 19th International Conference on Field Programmable Logic and Applications, FPL 2009, August 31 - September 2, 2009, Prague, Czech Republic) ist bekannt, eine PUF so robust zu realisieren, dass für eine Schlüsselextraktion nur eine geringe Anzahl an Bitfehlern korrigiert werden muss. Dadurch kann ein einfacherer Fehlerkorrekturcode für die Schlüsselextraktion verwendet werden. Dadurch wird der erforderliche Realisierungsaufwand für eine Fehlerkorrektur (Key Extractor) verringert, aber nicht vermieden.

Des Weiteren sind kryptographische Puzzles (Cryptographic Puzzles) bekannt, bei denen eine Entität einen Wert richtig erraten muss. Dazu kann z.B. eine kryptographische Hashfunktion wie SHA-1, SHA256, SHA3 etc. verwendet werden. Der Entität wird ein Zielwert vorgegeben. Die Entität muss einen gewissen Wertebereich, z.B. 16 Bit, durchprobieren, um denjenigen Eingabewert zu bestimmen, der dem vorgegebenen Ausgangswert entspricht. Dazu ist ein gewisser Rechenaufwand, d.h. Zeit erforderlich. Es ist insbesondere bekannt, solche kryptographischen Puzzles als Schutz vor Denial-of-Service-Angriffen zu verwenden. Ein Anfragender muss dabei zuerst ein ihm gestelltes kryptographisches Puzzle lösen, bevor die Anfrage bearbeitet wird. Cryptographic Puzzles werden z.B. in http://www.aut.upt.ro/~bgroza/Papers/puz.pdf, http://link.springer.com/article/10.1007%2Fs10623-013-9816-5# beschrieben.

Es sind Seitenkanalangriffe gegen Implementierungen von Kryptoalgorithmen bekannt, bei denen abhängig von Stromverbrauch, Laufzeitverhalten oder Elektro-Magnetischer Abstrahlung auf einen verwendeten kryptographischen Schlüssel geschlossen wird. Bei sogenannten Correlation Attacks, siehe http://en.wikipedia.org/wiki/Correlation_attack, wird eine Korrelation berechnet zwischen den erwarteten Abstrahl-Muster eines hypothetischen (Teil-)Schlüssels und dem tatsächlich beobachteten Abstrahl-Muster, siehe hierzu auch http://homes.esat.kuleuven.be/~iverbauw/ IndoPartIToWebsite.pdf, Folie 43ff.

Eine Schlüsselextraktion aus PUF-Responses mittels Korrekturdaten ist beispielsweise in US 7,681,103 B2 und WO 2010/100015 A1 beschrieben.

Vor diesem Hintergrund besteht eine Aufgabe der vorliegenden Erfindung darin, auf einfache und sichere Weise einen kryptographischen Schlüssel ohne zusätzliche Hilfsdaten bereitzustellen.

Demgemäß wird eine Schaltkreiseinheit zur Bereitstellung eines kryptographischen Schlüssels vorgeschlagen. Die Schaltkreiseinheit weist eine Physical Unclonable Function (PUF) zum Erzeugen eines Response-Wertes in Antwort auf einen Challenge-Wert, eine Bestimmungseinheit zum Bestimmen einer Mehrzahl von Challenge-Werten und zum Eingeben der Mehrzahl von Challenge-Werten in die Physical Unclonable Function, um eine Mehrzahl von Response-Werten zu erzeugen, eine Vergleichseinheit zum Bereitstellen eines Vergleichsergebnisses durch Vergleichen der erzeugten Mehrzahl von Response-Werten mit einem vordefinierten Referenzwert, und eine Bereitstellungeinheit zum Bereitstellen eines der Mehrzahl von Challenge-Werten als kryptographischen Schlüssel basierend auf dem bereitgestellten Vergleichsergebnis auf.

Wie bereits oben erläutert, werden für die Nutzung kryptographischer Sicherheitsmechanismen kryptographische Schlüssel benötigt. Ein kryptographischer Schlüssel wird üblicherweise erzeugt und in einem Speicher abgespeichert, um ihn nicht manuell bei jeder Benutzung eingeben zu müssen. Der kryptographische Schlüssel sollte hierbei wiederholt bzw. reproduzierbar bereitstellbar sein. In der vorgeschlagenen Schaltkreiseinheit wird ein kryptographischer Schlüssel unter Verwendung von Hardware-intrinsischen Eigenschaften des Halbleiterschaltkreises mittels einer Physical Unclonable Function (PUF) ermittelt. Der kryptographische Schlüssel kann auf einem eingebetteten Gerät sicher bereitgestellt werden und zum Schutz von festen oder konfigurierbaren gespeicherten Daten oder Programmcode des eingebetteten Systems verwendet werden.

Gemäß der vorgeschlagenen Schaltkreiseinheit, im folgenden auch Schaltkreis genannt, wird mittels einer Challenge-Response Physical Unclonable Function (CR-PUF) des Schaltkreises, der beispielsweise ein FPGA oder ASIC sein kann, ein Datenwert, der einen kryptographischen Schlüssel oder einen Identifier darstellt, reproduzierbar bereitgestellt. Es werden dazu keine Hilfsdaten benötigt, die in einem nichtflüchtigen Speicher abgelegt werden müssten.

Die CR-PUF ist eine auf dem Schaltkreis realisierte Funktion, die auf einen Challenge-Wert einen Response-Wert bereitstellt, z.B. Bitstrings der Länge 8, 16, 32, 64, 128, 256, 512 Bit. Die Response-Werte auf einen Challenge-Wert sind auf unterschiedlichen Schaltkreis-Exemplaren unterschiedlich, d.h. eine hohe Anzahl unterschiedlicher Bits, auf einem allerdings Schaltkreis-Exemplar ähnlich, d.h. nur eine gewisse Anzahl an unterschiedlichen Bits. Es ist möglich, dass eine PUF-Response aus mehreren Response-Teilwerten zusammengesetzt ist, falls eine Realisierung der Roh-CR-PUF eine geringere Response-Länge aufweist. So kann z.B. aus einer CR-PUF, die z.B. für einen Challenge-Wert nur ein Ausgabebit ermittelt, eine längere PUF-Response zusammengesetzt werden. Dabei können z.B. 3 Bit der Eingabe-Challenge, d.h. mit einem Wertebereich von dezimal 0 bis 7, verwendet werden, um eine Response der Länge 8 Bit zu bestimmen.

Basierend auf einer PUF wird hier ein Wert als kryptographischer Schlüssel aus einem vorgegebenen Wertebereich ermittelt, der auf einem Chip mit hoher Wahrscheinlichkeit bei wiederholter Ausführung identisch ist, auf unterschiedlichen Chips jedoch unterschiedlich. Unter kryptographischem Schlüssel werden im Folgenden auch Identifier oder Schlüsselableitungsparameter verstanden.

Beispielsweise soll ein 8-Bit-Teilwert aus dem Wertebereich von 0 bis 255 als kryptographischer Schlüssel ermittelt werden. Dazu wird gemäß einer festen, vorgegebenen Berechnungsvorschrift für jeden Kandidaten-Teilwert (zumindest) ein Challenge-Wert (Anfrage-Wert) in der Bestimmungseinheit bestimmt. Für einen beispielhaften Wertebereich von 0 bis 255 werden also 256 Challenge-Werte bestimmt. Durch die Bestimmungseinheit wird dann die PUF mit den ermittelten Challenge-Werten beaufschlagt. Für jeden Challenge-Wert wird somit ein zugeordneter Response-Wert erzeugt. Die Response-Werte (Antwort-Werte) werden nun mit einem erwarteten Referenzwert durch die Vergleichseinheit verglichen, welche ein Vergleichsergebnis bereitstellt. Basierend auf dem Vergleichsergebnis wird einer der Mehrzahl von Challenge-Werten als kryptographischer Schlüssel bereitgestellt.

Der Vergleichs- bzw. Referenzwert ist fest, sodass er nicht ermittelt und abgespeichert werden muss. Für unterschiedliche Teilwerte oder unterschiedliche Werte von mehreren möglichen bestimmbaren Werten können jedoch unterschiedliche, jedoch jeweils feste Referenzwerte verwendet werden.

Bei üblichen Verfahren wird ein kryptographischer Schlüssel zuerst erzeugt und dann geschützt gespeichert. Bei der hier vorgeschlagenen Schaltkreiseinheit hingegen wird ein kryptographischer Schlüssel direkt mittels einer PUF reproduzierbar bestimmt. Es kann damit zwar kein bestimmter Schlüssel vorgegeben werden. Dies hat jedoch den Vorteil, dass keine Initialisierung erforderlich ist, und dass keine Speicherung von Hilfsdaten zur Schlüsselrekonstruktion erforderlich ist. Es muss auch kein Schlüssel extra erzeugt werden, der dann gespeichert werden muss. Da kein Schlüssel vorgebbar ist, sondern sich ein Schlüssel ergibt, kann dieser beliebige Schlüssel für den internen Selbstschutz eines eingebetteten Gerätes, z.B. geschütztes Abspeichern von Konfigurationsdaten, verwendet werden.

Gemäß einer Ausführungsform entspricht ein Response-Wert einem Response-Muster und der vordefinierte Referenzwert einem Referenzmuster, und ist die Vergleichseinheit dazu eingerichtet, ein jeweiliges Response-Muster mit dem Referenzmuster zu vergleichen.

Bei dem Vergleich des Referenzwertes mit den Response-Werten erfolgt also eine Art Mustererkennung. Für mehrere mögliche Schlüssel, d.h. Challenge-Werte, wird durch Durchprobieren ermittelt, bei welchem Schlüssel ein erwartetes Muster, d.h. Referenzmuster, am deutlichsten in dem Response-Muster vorhanden ist. Das Vergleichs- bzw. Referenzmuster (Pattern) ist, wie bereits erläutert, fest, sodass es nicht ermittelt und abgespeichert werden muss.

Gemäß einer weiteren Ausführungsform ist die Vergleichseinheit dazu eingerichtet, ein Ähnlichkeitsmaß zwischen der Mehrzahl von Response-Werten und dem vordefinierten Referenzwert zu bestimmen.

Beim Vergleich des Referenzwerts bzw. -musters mit den jeweiligen Response-Werten bzw. -Mustern kann ein Ähnlichkeitsmaß des jeweiligen Response-Musters mit dem Referenz-Response-Wert bestimmt ("Matching") werden. Von der Bereitstellungseinheit kann nun derjenige Challenge-Wert als Ergebnis bereitgestellt werden, dessen Response-Wert das höchste Ähnlichkeitsmaß aufweist.

Gemäß einer weiteren Ausführungsform weist das Ähnlichkeitsmaß Informationen über die Übereinstimmung der Anzahl von Bits zwischen einem jeweiligen Response-Wert und dem vordefinierten Referenzwert auf.

Es kann z.B. die Anzahl der unterschiedlichen Bits, d.h. die Hamming-Distanz, als Ähnlichkeitsmaß verwendet werden.

Gemäß einer weiteren Ausführungsform ist jeder Challenge-Wert der Mehrzahl von Challenge-Werten ein Teilwert eines Gesamtwertebereichs.

Wie oben erläutert, kann beispielsweise ein 8-Bit-Teilwert aus dem Gesamtwertebereich von 0 bis 255 als kryptographischer Schlüssel ermittelt werden. Dazu wird gemäß einer festen, vorgegebenen Berechnungsvorschrift für jeden Kandidaten-Teilwert (zumindest) ein Challenge-Wert in der Bestimmungseinheit bestimmt. Für einen beispielhaften Wertebereich von 0 bis 255 werden also 256 Challenge-Werte bestimmt. Ein Challenge-Wert kann auch 12 Bit, 4 Bit, 2 Bit, 1 Bit, oder irgendeine andere Länge aufweisen.

Gemäß einer weiteren Ausführungsform ist die Bestimmungseinheit dazu eingerichtet, die Teilwerte aus dem Gesamtwertebereich nach einem vordefinierten Schema auszuwählen.

Es können unterschiedliche Bestimmungsvorschriften zur Bildung eines Challenge-Werts vorgesehen sein. So können z.B. manche Bits der Challenge-Werte fest vorgegeben werden, oder es kann eine deterministische Berechnung der Challenge-Werte erfolgen. Es können auch für einen Challenge-Wert mehrere PUF-Challenge-Werte ermittelt werden, mit denen die PUF beaufschlagt wird.

Der Wertebereich kann in bestimmter Suchfolge durchlaufen werden. Zum Beispiel kann das Schema auf einem Startwert oder einer Suchreihenfolge, d.h. linear, Hopping (Überspringen), multiplizieren, zyklisch (Cyclic Code), oder anderen Strategien beruhen. Die Suchfolge kann in einer Variante randomisiert durchlaufen werden, hierbei wird die Reihenfolge abhängig von einem zur Laufzeit mittels eines Zufallszahlengenerators bestimmten Werts bestimmt.

Gemäß einer weiteren Ausführungsform ist der als kryptographischer Schlüssel bereitgestellte Challenge-Wert der Mehrzahl von Challenge-Werten ein kryptographischer Teilschlüssel eines Gesamtschlüssels.

Ein Gesamtschlüssel kann aus mehreren Teilschlüsseln bestehen. Hierbei wird die Bestimmung für jeden Teilschlüssel durchgeführt, die am Ende zusammengesetzt werden. Beispielsweise kann jeweils ein 8-Bit-Teilschlüssel bestimmt werden, um einen kryptographischen Schlüssel mit 128 Bit, 256 Bit o.ä. Byte-weise zusammenzusetzen. Der Gesamtschlüssel kann z.B. durch Konkatenation der Teilschlüssel bestimmt werden.

Gemäß einer weiteren Ausführungsform ist die Vergleichseinheit dazu eingerichtet ist, die erzeugte Mehrzahl von Response-Werten mit einer Mehrzahl von vordefinierten Referenzwerten zu vergleichen, und ist die Bereitstellungseinheit dazu eingerichtet, eine Mehrzahl von Teilschlüsseln basierend auf den Vergleichsergebnissen zu bestimmen.

Es können die einzelnen Teilschlüssel mittels mehrerer Referenzwerte bestimmt werden. Des Weiteren können auch mehrere Schlüssel aus einer PUF extrahiert werden. Dazu kann ein Verwendungszweck, d.h. Zweckbestimmungsparameter, des Schlüssels in die Challenge-Bestimmung und/oder die Referenzwert-Auswahl/-Bestimmung eingehen.

Gemäß einer weiteren Ausführungsform ist die Bestimmungseinheit dazu eingerichtet, jeden der Mehrzahl von Challenge-Werten wiederholt in die Physical Unclonable Function einzugeben, um eine Mehrzahl von Response-Werten für jeden Challenge-Wert zu bestimmen.

Es können mehrere Response-Werte für einen Challenge-Wert durch wiederholte Beaufschlagung der PUF bestimmt werden. Auf diese Weise können zufällige Bitfehler ausgemittelt werden.

Es können auch mehrere Response-Werte einer PUF konkateniert werden, wobei mehrere PUF-Challenge-Werte gemäß einer Bestimmungsvorschrift abhängig von dem abgeprüften Challenge-Wert des Teilschlüssels ermittelt werden.

Dies hat den Vorteil, dass die Länge eines für den Vergleich genutzten PUF-Response-Werts größer gewählt werden kann als die Größe des Response-Werts einer schaltungstechnisch realisierten CR-PUF. Es ist dadurch insbesondere möglich, eine CR-PUF zu verwenden, die nur ein einzelnes Response-Bit für einen ihr vorgegebenen Challenge-Wert bereitstellt. Es werden dabei also mehrere Response-Bits, z.B. 8, 12 oder 16 Bit zu einer Response bzw. einem Response-Wert zusammengesetzt (konkateniert). Die derart zusammengesetzte Response wird dann für den Vergleich wie oben beschrieben verwendet. In einer Variante wird der abgeprüfte Challenge-Wert mit einem Zählerwert, z.B. 3 Bit oder 4 Bit, zusammengesetzt. Die mehreren Teil-Responses für einen abgeprüften Challenge-Wert werden ermittelt, indem der abgeprüfte Challenge-Wert mit allen oder zumindest einigen der möglichen Zählerwerte zusammengesetzt wird und die PUF mit diesem kombinierten Challenge-Wert jeweils beaufschlagt wird. Zur Bestimmung einer für den Vergleich verwendeten Response wird die CR-PUF also mehrfach mit einer zusammengesetzten Challenge bzw. Challenge-Wert beaufschlagt.

Gemäß einer weiteren Ausführungsform ist die Bereitstellungseinheit dazu eingerichtet, eine Mehrzahl von möglichen Challenge-Werten bereitzustellen.

Gemäß dieser Ausführungsform können mehrere Kandidaten für einen Challenge-Wert bereitgestellt werden. Beispielsweise können die drei Challenge-Werte mit der höchsten Übereinstimmung als mögliche Challenge-Werte bereitgestellt werden.

Gemäß einer weiteren Ausführungsform weist die Schaltkreiseinheit eine Testeinheit zum Überprüfen der möglichen Challenge-Werte mit Hilfe von Testdaten und zum Auswählen eines der möglichen Challenge-Werte als kryptographischen Schlüssel auf.

Um einen der möglichen Challenge-Werte als kryptographischen Schlüssel auszuwählen, kann die Testeinheit diese mit Hilfe von Testdaten überprüfen. Hierzu werden die einzelnen möglichen Challenge-Werte als kryptographische Schlüssel testweise verwendet. Diese Verwendung wird geprüft, und der Challenge-Wert mit den besten Ergebnissen wird als kryptographischer Schlüssel bereitgestellt.

Gemäß einer weiteren Ausführungsform unterscheiden sich die Mehrzahl von Response-Werten und der Referenzwert in der Länge.

Die Vergleichseinheit, auch Matcher genannt, sucht in einer Variante nicht nach einer Ähnlichkeit zwischen den Response-Werten und dem Referenzwert mit festen Mustern gleicher Länge, sondern korreliert das Response-Muster mit einem (kürzeren) Referenz-Muster. Es wird dabei nicht nur die Anzahl unterschiedlicher bzw. identischer Bits überprüft, sondern wie häufig ein ähnliches Signal in der längeren Folge vorkommt. Gemäß einer weiteren Ausführungsform ist die Vergleichseinheit dazu eingerichtet, den vordefinierten Referenzwert durch einen weiteren vordefinierten Referenzwert zu ersetzen.

Es können auch mehrere Referenzwerte verwendet werden. Es kann dann derjenige Referenzwert für die zukünftige Verwendung ausgewählt werden, der über alle Challenge-Werte den höchsten maximalen Wert, d.h. die höchste Übereinstimmung, liefert.

Die vorgeschlagene Schaltkreiseinheit zur Bestimmung eines Schlüssels mittels einer PUF benötigt keine Hilfsdaten. Diese müssten ermittelt werden (Enrollment) und in einem nichtflüchtigen Speicher abgelegt werden. Sie kann insbesondere direkt intern durch den Bitstream innerhalb eines FPGAs o.ä. als autonomes Modul realisiert werden, das keine Schnittstelle zu einem Konfigurationsspeicher mit gespeicherten Hilfsdaten benötigt.

Das Verfahren ist für beliebige Challenge-Response-PUFs anwendbar, nicht nur für konfigurierbare Ringoszillator-PUFs. Auch ist nur ein Zugriff auf die Außenschnittstelle einer Challenge-Response-PUF erforderlich, kein Zugriff auf interne Residuen.

Es muss kein Fehlerkorrekturverfahren wie BCH-Codes, RS-Codes o.ä. realisiert werden, sondern es werden nur als Digitalschaltung einfache, ressourcensparend realisierbare Funktionen benötigt. Der kryptographische Schlüssel kann nicht vorgegeben werden, sondern ergibt sich. Diese Eigenschaft ist beispielsweise geeignet, wenn nur ein Embedded Device selbst sensitive Konfigurationsdaten schützen möchte. Das bedeutet, dass dasselbe Gerät Konfigurationsdaten speichert und liest, d.h. es erfolgt keine Kommunikation mit einem zweiten Kommunikationspartner.

Gemäß einem weiteren Aspekt der Erfindung wird ein Verfahren zur Bereitstellung eines kryptographischen Schlüssels vorgeschlagen. Das Verfahren weist die folgenden Schritte auf: Bestimmen einer Mehrzahl von Challenge-Werten, Eingeben der Mehrzahl von Challenge-Werten in eine Physical Unclonable Function (PUF), um eine Mehrzahl von Response-Werten in Antwort auf die Challenge-Werte zu erzeugen, Bereitstellen eines Vergleichsergebnisses durch Vergleichen der erzeugten Mehrzahl von Response-Werten mit einem vordefinierten Referenzwert, und Bereitstellen eines der Mehrzahl von Challenge-Werten als kryptographischen Schlüssel basierend auf dem bereitgestellten Vergleichsergebnis.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Schaltkreiseinheit beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Blockschaltbild eines ersten Ausführungsbeispiels einer Schaltkreiseinheit zur Bereitstellung eines kryptographischen Schlüssels;
Fig. 2 zeigt ein schematisches Blockschaltbild eines zweiten Ausführungsbeispiels einer Schaltkreiseinheit zur Bereitstellung eines kryptographischen Schlüssels;
Fig. 3 zeigt eine Übereinstimmungstabelle zur Verwendung in der Schaltkreiseinheit von Fig. 2; und
Fig. 4 zeigt ein Ablaufdiagramm eines Ausführungsbeispiels eines Verfahrens zur Bereitstellung eines kryptographischen Schlüssels.

In den Figuren sind gleiche oder funktionsgleiche Elemente mit denselben Bezugszeichen versehen worden, sofern nichts anderes angegeben ist.

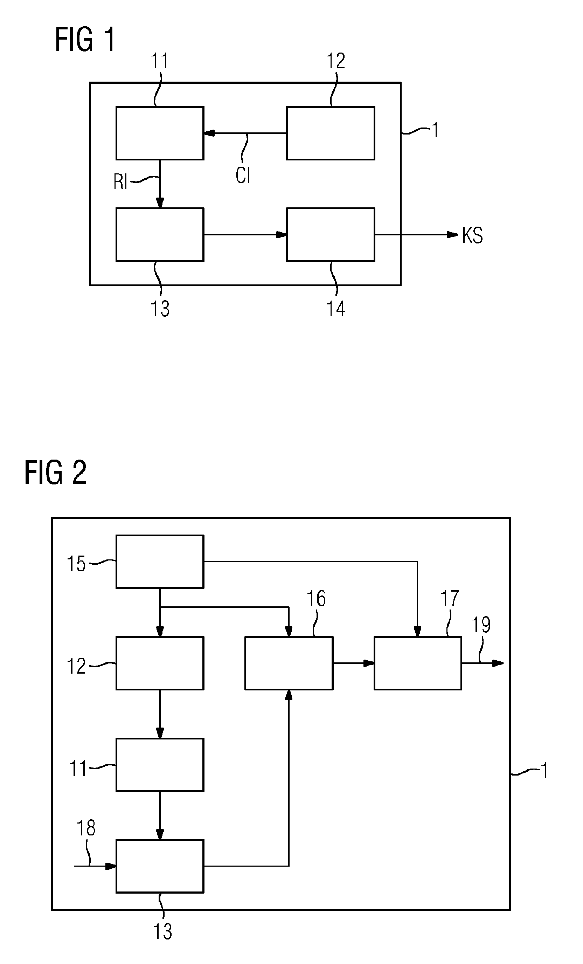

Fig. 1 zeigt eine Ausführungsform einer Schaltkreiseinheit 1 zur Bereitstellung eines kryptographischen Schlüssels KS.

Die Schaltkreiseinheit 1 weist eine Physical Unclonable Function (PUF) 11 zum Erzeugen eines Response-Wertes RI in Antwort auf einen Challenge-Wert CI auf. Eine Bestimmungseinheit 12 bestimmt eine Mehrzahl von Challenge-Werten CI und gibt diese der Reihe nach in die PUF 11 ein, d.h. beaufschlagt die PUF 11 mit den Challenge-Werten CI.

Die PUF 11 erzeugt für jeden Challenge-Wert CI einen Response-Wert RI und sendet diesen an eine Vergleichseinheit 13. Diese vergleicht jeden Response-Wert RI mit einem vordefinierten Referenzwert 18 und stellt das Vergleichsergebnis an eine Bereitstellungseinheit 14 bereit. Die Bereitstellungeinheit 14 stellt einen der Mehrzahl von Challenge-Werten CI dann als kryptographischen Schlüssel KS basierend auf dem bereitgestellten Vergleichsergebnis bereit.

Fig. 2 zeigt eine Schaltkreiseinheit 1 zur Bestimmung eines Teilschlüssels 19, auch Sub-Key genannt, der einen Teil des kryptographischen Schlüssels KS darstellt.

Der Sub-Key 19 kann z.B. ein 8 Bit Wert sein. Dieser kann die möglichen Werte 0 - 255 (dezimal) bzw. 0000 0000 - 1111 1111 (binär) annehmen. Das Ziel ist nun, einen bestimmten Sub-Key 19 zu bestimmen. Dazu erzeugt der Teilschlüssel-Erzeuger (Sub Key Sequencer) 15 alle möglichen Werte des Sub-Keys 19. Dies kann z.B. in aufeinanderfolgender Reihenfolge geschehen, aber auch andere Reihenfolgen sind möglich.

Für jeden möglichen Kandidaten, d.h. möglichen Teilschlüssel, wird ein zugeordneter Challenge-Wert CI durch eine "Challenge Determination" in der Bestimmungseinheit 12 bestimmt, mit dem die CR-PUF beaufschlagt wird. Der ermittelte Response-Wert RI wird durch den Matcher 13 darauf geprüft, ob der Response-Wert RI ein vorgegebenes Referenzmuster 18 aufweist bzw. in welchem Maß er dem Referenzmuster ähnelt. Das Ergebnis kann hart vorliegen (true/false) oder als weicher Wert (z.B. als Wert 0-7, der ein Maß für das Vorhandensein des Musters angibt, z.B. eine Kreuzkorrelation ermittelt). Abhängig von dem vom Matcher 13 ermittelten Wert wird der Eintrag in eine Übereinstimmungstabelle 16 (Sub Key Match Counting Table), der dem aktuell vom Sub Key Sequencer 15 bereitgestellten Sub Key 19 entspricht, aktualisiert. Es kann direkt die Übereinstimmung mit einem oder mehreren Referenzmustern 18 erfolgen (z.B. bitweise XOR-Verknüpfung). Es kann auch zuerst eine Merkmalsextraktion aus dem Response-Wert RI erfolgen (z.B. Hamming-Gewicht, Anzahl der Bitwechsel in der Bitfolge, Anzahl der n-Bit-Folgen mit identischem Bitwert) und dann anhand der extrahierten Merkmale des Response-Werts das Übereinstimmungsergebnis (Matching-Ergebnis) in der Übereinstimmungsbestimmungseinheit 17 bestimmt werden.

Wenn der Sub-Key-Sequencer 15 alle Werte durchlaufen hat, wird der Übereinstimmungsbestimmungseinheit 17 (maximum match selection) ein Signal bereitgestellt, dass die Auswertung der Übereinstimmungstabelle 16 erfolgen kann. Dazu wird insbesondere der Sub-Key 19 des Sub-Key-Eintrags mit dem besten Übereinstimmungs-Ergebnis bereitgestellt.

Bei nur einem Durchlauf mit einem festen Muster und einem Hard-Matcher kann nur ein Wert 0 oder 1 als "Match Count", d.h. Übereinstimmungsmaß, auftreten. Da kein Enrollment bzw. keine Initialisierung von Hilfsdaten vorkommt, kann nur statistisch angegeben werden, wie viele Übereinstimmungen auftreten. Es kann daher nicht ausgeschlossen werden, dass bei einer so einfachen Variante gegebenenfalls kein Eintrag oder mehrere Einträge einen Eintrag 1 aufweisen. Dann kann kein bzw. kein eindeutiges Ergebnis ermittelt werden. Dies kann gelöst werden, indem z.B. der kleinste oder der größte oder der zweite etc. Sub Key Wert verwendet wird. In einer Variante kann eine Verknüpfung aller übereinstimmenden Sub Key Werte, d.h. Challenge-Werte CI, (z.B. XOR-Verknüpfung) erfolgen, um den Ausgabe-Sub-Key-Wert 19 zu ermitteln.

Eine Implementierung realisiert einen mehrwertigen Match Count, d.h. eine Bestimmung bei der eine Übereinstimmung durch mehrere Werte festgelegt wird. Hierbei kann eine der folgenden Möglichkeiten verwendet werden:
Ein "Soft Decision Matcher" kann verwendet werden, der nicht nur 0 oder 1 ausgibt, sondern ein mehrwertiges Ergebnis über das Maß der Muster-Übereinstimmung. Er kann z.B. die Zahl der Bitabweichungen (Hamming-Distanz) bei gleicher Bitlänge von Response-Muster und Referenzmuster angeben. In einer anderen Variante sind die beiden Muster unterschiedlich lang. Sie können dann bitweise verschoben werden und für jeden Versatz kann die Anzahl der übereinstimmenden Bits erfasst werden. Es kann die Übereinstimmung eines Response-Musters mit mehreren Referenz-Mustern geprüft werden. Das Gesamt-Übereinstimmungs-Ergebnis kann z.B. durch Addition, als Maximum oder als Minimum-Wert bestimmt werden.

Alternativ kann der Wertebereich mehrfach durchlaufen werden, wobei identische Challenge-Werte mit identischem Referenzmuster verwendet werden. Das Gesamt-Übereinstimmungs-Ergebnis kann z.B. durch Maximum-Wert, Minimum-Wert, Median-Wert, Mittelwert bestimmt werden.

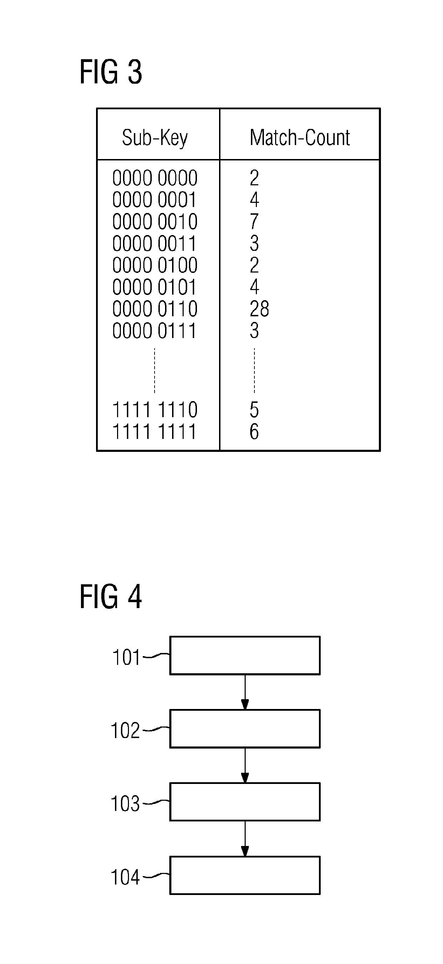

Für jeden möglichen Wert des Sub-Keys 19 kann einen Übereinstimmungs-Wert in einer Übereinstimmungstabelle, wie sie in Fig. 3 gezeigt ist, erfasst werden. In der dargestellten Tabelle ist der Eintrag für den Sub-Key 0000 0110 (binär) bzw. 6 der Eintrag mit der höchsten Übereinstimmungszahl. Dieser Wert würde daher als Sub-Key 19 bestimmt werden.

In einer Ausführungsform durchläuft der Sub-Key-Sequencer 15 die Folge möglicher Sub-Key-Werte 19 mehrfach. In einer Variante hängt die Anzahl der Durchläufe davon ab, wie signifikant die Unterschiede der Top-Einträge in der Übereinstimmungs-Tabelle sind. Wenn sich z.B. die Top-3-Sub-Key-Kandidaten nur geringfügig unterscheiden, so kann ein erneuter Durchlauf erfolgen.

In einer anderen Ausführungsform kann bei zu geringem Unterschied der Übereinstimmungs-Ergebnisse ein alternatives Referenzmuster verwendet werden. In einer weiteren Ausführungsform werden während eines Durchlaufs mehrere Referenzmuster geprüft. Ebenso können bei mehreren Durchläufen unterschiedliche Challenge-Wert-Bestimmungsvorschriften verwendet werden.

Die in Fig. 3 dargestellte Variante stellt nur einen relativ kurzen Sub-Key bereit, z.B. 8 Bit. Es können auch z.B. 4 Bit, 6 Bit, 10 Bit, 12 Bit, 16 Bit verwendet werden. Von der Bitgröße hängt der Zeitaufwand ab, da der gesamte Wertebereich durchlaufen werden muss.

Ein längerer Key KS, z.B. mit 128 Bit, 256 Bit Länge kann gebildet werden, indem mehrere Sub-Keys 19 bestimmt werden. Dazu wird in einer Variante für jeden Sub-Key 19 ein anderes Referenzmuster verwendet. In einer anderen Variante wird für jeden Sub-Key 19 eine andere Challenge-Wert-BerechnungsVorschrift angewandt.

Fig. 4 zeigt ein Verfahren zur Bereitstellung eines kryptographischen Schlüssels.

In einem ersten Schritt 101 wird hierbei eine Mehrzahl von Challenge-Werten CI bestimmt.

Anschließend werden in einem zweiten Schritt 102 die Mehrzahl von Challenge-Werten CI in eine Physical Unclonable Function 11 eingegeben, bzw. die Physical Unclonable Function 11 mit den Challenge-Werten CI beaufschlagt, um eine Mehrzahl von Response-Werten RI in Antwort auf die Challenge-Werte CI zu erzeugen.

In einem dritten Schritt 103 wird ein Vergleichsergebnis durch Vergleichen der erzeugten Mehrzahl von Response-Werten RI mit einem vordefinierten Referenzwert 18 bereitgestellt.

Basierend auf diesem Vergleichsergebnis wird in einem vierten Schritt 104 einer der Mehrzahl von Challenge-Werten CI als kryptographischer Schlüssel 18 bereitgestellt.

Obwohl die vorliegende Erfindung anhand von Ausführungsbeispielen beschrieben wurde, ist sie vielfältig modifizierbar.

## Patentansprüche

1. Schaltkreiseinheit (1) zur Bereitstellung eines kryptographischen Schlüssels, mit:
einer Physical Unclonable Function (11) zum Erzeugen eines Response-Wertes (RI) in Antwort auf einen Challenge-Wert (CI),
einer Bestimmungseinheit (12) zum Bestimmen einer Mehrzahl von Challenge-Werten (CI) und zum Eingeben der Mehrzahl von Challenge-Werten (CI) in die Physical Unclonable Function (11), um eine Mehrzahl von Response-Werten (RI) zu erzeugen,
einer Vergleichseinheit (13) zum Bereitstellen eines Vergleichsergebnisses durch Vergleichen der erzeugten Mehrzahl von Response-Werten (RI) mit einem vordefinierten Referenzwert (18), und
einer Bereitstellungeinheit (14) zum Bereitstellen eines der Mehrzahl von Challenge-Werten (CI) als kryptographischen Schlüssel (KS) basierend auf dem bereitgestellten Vergleichsergebnis.

2. Schaltkreiseinheit nach Anspruch 1,
**dadurch gekennzeichnet,**
**dass** ein Response-Wert (RI) einem Response-Muster entspricht und der vordefinierte Referenzwert (18) einem Referenzmuster entspricht, und dass die Vergleichseinheit (13) dazu eingerichtet ist, ein jeweiliges Response-Muster mit dem Referenzmuster zu vergleichen.

3. Schaltkreiseinheit nach Anspruch 1 oder 2,
**dadurch gekennzeichnet,**
**dass** die Vergleichseinheit (13) dazu eingerichtet ist, ein Ähnlichkeitsmaß zwischen der Mehrzahl von Response-Werten (RI) und dem vordefinierten Referenzwert (18) zu bestimmen.

4. Schaltkreiseinheit nach Anspruch 3,
**dadurch gekennzeichnet,**
**dass** das Ähnlichkeitsmaß Informationen über die Übereinstimmung der Anzahl von Bits zwischen einem jeweiligen Response-Wert (RI) und dem vordefinierten Referenzwert (18) aufweist.

5. Schaltkreiseinheit nach einem der Ansprüche 1 - 4,
**dadurch gekennzeichnet,**
**dass** jeder Challenge-Wert (CI) der Mehrzahl von Challenge-Werten ein Teilwert eines Gesamtwertebereichs ist.

6. Schaltkreiseinheit nach Anspruch 5,
**dadurch gekennzeichnet,**
**dass** die Bestimmungseinheit (12) dazu eingerichtet ist, die Teilwerte aus dem Gesamtwertebereich nach einem vordefinierten Schema auszuwählen.

7. Schaltkreiseinheit nach einem der Ansprüche 1 - 6,
**dadurch gekennzeichnet,**
**dass** der als kryptographischer Schlüssel (KS) bereitgestellte Challenge-Wert (CI) der Mehrzahl von Challenge-Werten ein kryptographischer Teilschlüssel eines Gesamtschlüssels ist.

8. Schaltkreiseinheit nach Anspruch 7,
**dadurch gekennzeichnet,**
**dass** die Vergleichseinheit (13) dazu eingerichtet ist, die erzeugte Mehrzahl von Response-Werten (RI) mit einer Mehrzahl von vordefinierten Referenzwerten (18) zu vergleichen, und dass die Bereitstellungseinheit (14) dazu eingerichtet ist, eine Mehrzahl von Teilschlüsseln basierend auf den Vergleichsergebnissen zu bestimmen.

9. Schaltkreiseinheit nach einem der Ansprüche 1 - 8,
**dadurch gekennzeichnet,**
**dass** die Bestimmungseinheit (12) dazu eingerichtet ist, jeden der Mehrzahl von Challenge-Werten (CI) wiederholt in die Physical Unclonable Function (11) einzugeben, um eine Mehrzahl von Response-Werten (RI) für jeden Challenge-Wert (CI) zu bestimmen.

10. Schaltkreiseinheit nach einem der Ansprüche 1 - 9,
**dadurch gekennzeichnet,**
**dass** die Bereitstellungseinheit (14) dazu eingerichtet ist, eine Mehrzahl von möglichen Challenge-Werten (CI) bereitzustellen.

11. Schaltkreiseinheit nach Anspruch 10,
**gekennzeichnet durch**
eine Testeinheit zum Überprüfen der möglichen Challenge-Werte (CI) mit Hilfe von Testdaten und zum Auswählen eines der möglichen Challenge-Werte (CI) als kryptographischen Schlüssel (KS).

12. Schaltkreiseinheit nach einem der Ansprüche 1 - 11,
**dadurch gekennzeichnet,**
**dass** sich die Mehrzahl von Response-Werten (RI) und der Referenzwert (18) in der Länge unterscheiden.

13. Schaltkreiseinheit nach einem der Ansprüche 1 - 12,
**dadurch gekennzeichnet,**
**dass** die Vergleichseinheit (13) dazu eingerichtet ist, den vordefinierten Referenzwert (18) durch einen weiteren vordefinierten Referenzwert zu ersetzen.

14. Verfahren zur Bereitstellung eines kryptographischen Schlüssels, mit:
Bestimmen (101) einer Mehrzahl von Challenge-Werten (CI),
Eingeben (102) der Mehrzahl von Challenge-Werten (CI) in eine Physical Unclonable Function (11), um eine Mehrzahl von Response-Werten (RI) in Antwort auf die Challenge-Werte (CI) zu erzeugen,
Bereitstellen (103) eines Vergleichsergebnisses durch Vergleichen der erzeugten Mehrzahl von Response-Werten (RI) mit einem vordefinierten Referenzwert (18), und
Bereitstellen (104) eines der Mehrzahl von Challenge-Werten (CI) als kryptographischen Schlüssel (18) basierend auf dem bereitgestellten Vergleichsergebnis.

15. Computerprogrammprodukt, welches auf einer programmgesteuerten Einrichtung die Durchführung des Verfahrens nach Anspruch 14 veranlasst.
